# EUROPEAN PATENT SPECIFICATION

(11) **EP 1 475 204 B1**
(45) Date of publication and mention of the grant of the patent: **13.02.2008**
(21) Application number: 04101994.4
(22) Date of filing: 07.05.2004
(51) Int. Cl.: B27M 1/08, B23Q 7/04, B23Q 17/20, B23Q 16/00, B23Q 1/62, B23Q 7/06, B65H 3/08, G05B 19/401

(54) **Machine for processing wood panels or similar**
Werkzeugmaschine zur Bearbeitung von Holzplatten oder dergleichen
Machine-outil servant a l'usinage de panneaux de bois ou similaires

(30) Priority: 07.05.2003 IT BO20030279
(43) Date of publication of application: 10.11.2004
(73) Proprietor: IMPRESA 2000 DI SACCHI PARIDE E C. s.a.s., 47900 Rimini (IT)
(72) Inventor: Sacchi Paride, 47900 Rimini (IT)
(74) Representative: Jorio, Paolo

(56) References cited:
- EP-A- 0 506 621
- EP-A- 1 304 188
- DE-A- 19 627 946
- DE-U- 20 120 579
- US-A- 5 205 705

## Description

The present invention relates to a machine for processing wood panels or similar as per the preamble of claim 1.

Wood panels are known to be processed using a machine of the type disclosed, for example, in document DE-20120579-U1 and comprising supporting means defining a supporting surface for at least one panel for processing; gripping and transportation means for moving the panel on the supporting surface in a first and second direction perpendicular to each other and parallel to the supporting surface; and a work head having at least one tool spindle rotating about a longitudinal axis perpendicular to the supporting surface, and movable, with respect to the panel, in a third direction perpendicular to the supporting surface.

The gripping and transportation means normally support locating means fitted crosswise with respect to the supporting surface to position the panel correctly in said first direction.

Known machines of the above type have various drawbacks, mainly due to manual, and therefore relatively slow, inaccurate, loading of the panels onto the gripping and transportation means and locating means.

It is an object of the present invention to provide a machine for processing wood panels or similar, designed to eliminate the aforementioned drawbacks, and which is cheap and easy to produce.

According to the present invention, there is provided a machine for processing wood panels or similar, as claimed in the accompanying claims.

A non-limiting embodiment of the present invention will be described by way of example with reference to the accompanying drawings, in which:
Figure 1 shows a schematic plan view of a preferred embodiment of the machine according to the present invention;
Figure 2 shows a schematic side view, with parts removed for clarity, of the Figure 1 machine.

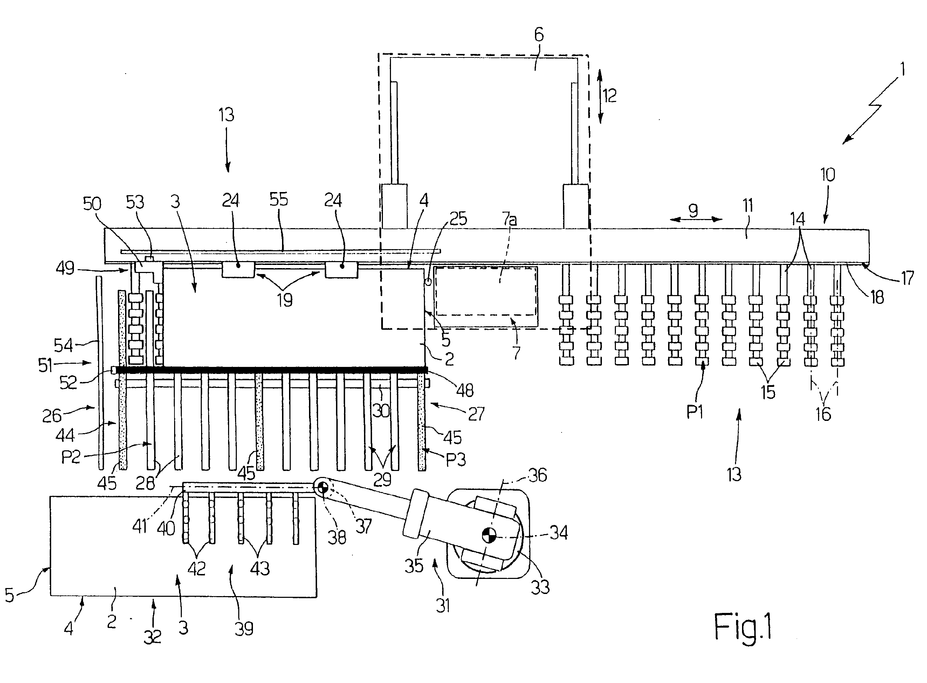

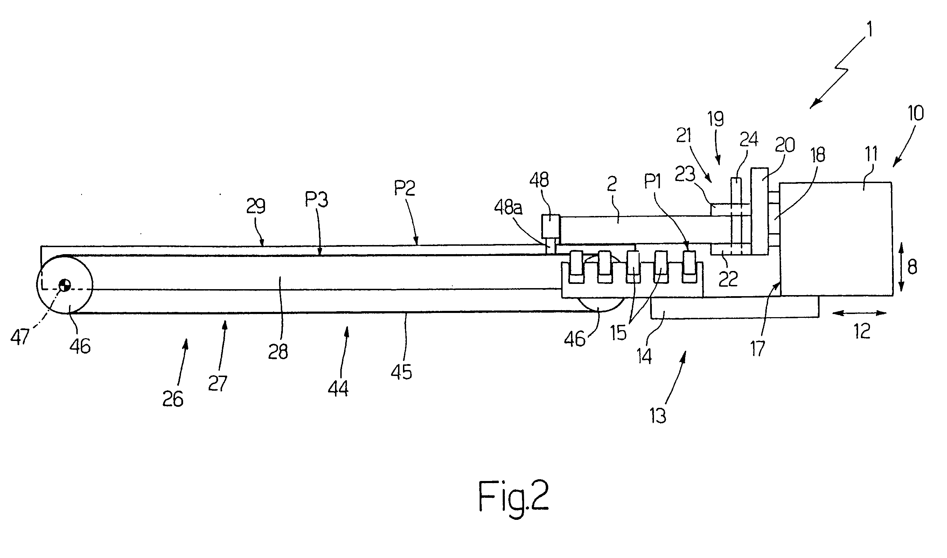

Number 1 in Figures 1 and 2 indicates as a whole a machine for processing wood panels 2 or similar, each of which is substantially parallelepiped-shaped with a substantially rectangular section, and has two substantially parallel major lateral faces 3, two parallel minor lateral faces 4 perpendicular to faces 3, and two parallel minor lateral faces 5 perpendicular to faces 3 and 4.

Machine 1 comprises a substantially C-shaped base 6 having a substantially flat, horizontal supporting table 7, and supporting at least one work head 7a, which is located over table 7, is fitted in known manner to base 6 to move linearly, with respect to base 6 and under the control of a known actuating device (not shown), in a vertical direction 8 perpendicular to table 7, and has a number of known tool spindles (not shown) mounted to rotate about respective axes (not shown) substantially parallel to direction 8 and/or to a direction 9 parallel to table 7 and perpendicular to direction 8.

Machine 1 also comprises a gripping and transportation unit 10 for gripping and transporting panels 2, and comprising an elongated cross member 11, which extends in direction 9 and is fitted in known manner to base 6 to move linearly, with respect to base 6 and under the control of a known actuating device (not shown), in a direction 12 perpendicular to directions 8 and 9.

Cross member 11 has two supporting units 13 located on opposite sides of table 7 in direction 9, and each of which comprises a number of side by side supporting bars 14 projecting from cross member 11 in direction 12, and each supporting a number of supporting rollers 15.

Rollers 15 are fitted idly to relative bars 14 to rotate, with respect to relative bars 14, about respective axes 16 parallel to direction 12, and define, together with table 7, a supporting surface P1 for panels 2.

Cross member 11 is bounded at the front by a flat surface 17 perpendicular to direction 12, and comprises a guide 18 fitted to surface 17, parallel to direction 9, and supporting, in the example shown, two gripping and transportation devices 19 for moving panels 2 on surface P1, and each of which comprises a slide 20 fitted in known manner to guide 18 to move linearly in direction 9 along guide 18 under the control of a known actuating device (not shown).

Each slide 20 supports a gripping member 21 comprising a bottom jaw 22 and a top jaw 23, which are substantially parallel to surface P1, engage at least one panel 2 by a longitudinal edge parallel to direction 9, and are fitted in known manner to relative slide 20 to move - with respect to relative slide 20, under the control of a known actuating device (not shown), and in direction 8 - between a gripping position gripping panels 2, and a release position releasing panels 2.

Member 21 also comprises at least one locating member 24 extending parallel to direction 8 and crosswise to surface P1 to position panels 2 correctly in direction 12.

Machine 1 also comprises at least one further locating member 25 extending parallel to direction 8 and crosswise to surface P1, and which is movable, with respect to bars 14 and in direction 8, between a raised work position, in which member 25 projects above surface P1 to position panels 2 correctly in direction 9, and a lowered rest position, in which member 25 is located substantially below surface P1.

Machine 1 also comprises a positioning unit 26 for positioning panels 2 against members 24 and 25, and which comprises a supporting device 27, in turn comprising a number of supporting bars 28, each of which extends in direction 12, between two adjacent bars 14, and is defined at the top by a flat, horizontal surface 29 defining, together with surfaces 29 of the other bars 28, a supporting surface P2 substantially parallel to surface P1.

Bars 28 are fitted to a supporting frame 30, which is movable, with respect to base 6, between a raised position, in which surface P2 is located above surface P1, and a lowered position, in which surface P2 is located below surface P1.

Unit 26 also comprises a known loading device 31, which removes panels 2 successively off a stack 32 of panels 2, loads the removed panels 2 successively onto surface P2, and comprises a platform 33 mounted to rotate about a vertical axis 34 parallel to direction 8, and a telescopic arm 35 extending radially outwards from platform 33 and hinged to platform 33 to oscillate, with respect to platform 33, about a hinge axis 36 perpendicular to axis 34.

At its free end, arm 35 has a column 37 fitted to arm 35 to rotate, with respect to arm 35, about a hinge axis 38 crosswise to axis 36, and supporting a gripping device 39 for gripping panels 2.

Device 39 comprises an arm 40 fitted to column 37 to rotate, with respect to column 37, about a hinge axis 41 substantially perpendicular to axis 38; and a number of bars 42, which project perpendicularly from arm 40, are spaced apart with substantially the same spacing as arms 28, and each have a number of suction cups 43.

When released onto bars 28, i.e. onto surface P2, panels 2 are fed in direction 12 between jaws 22 and 23 of the two members 21 and into contact with members 24 by a feed device 44 comprising a number of (in the example shown, three) belt conveyors 45, which extend in respective planes perpendicular to surface P2, are parallel to and side by side with bars 28, and are looped about respective pairs of pulleys 46 mounted to rotate, in time with one another and intermittently back and forth, about respective axes 47 parallel to direction 9.

Conveyors 45 have respective top conveying branches, which are substantially coplanar with a surface P3 parallel to and below surface P2 to allow panels 2 to rest on bars 28, and support a push bar 48, which extends in direction 9, engages panels 2 by one of relative faces 4, and is connected to conveyors 45 with the interposition of respective spacers 48a so as to move over, without interfering with, bars 28.

Unit 26 also comprises a feed device 49 for moving panels 2 in direction 9 and into contact with member 25, and comprising a push member 50, which is fitted in known manner to guide 18 to move linearly in direction 9 along guide 18, and engages panels 2 by one of relative faces 5.

Operation of machine 1 will now be described with reference to Figures 1 and 2 and to the processing of one panel 2 only, and as of the instant in which:
frame 30 is in the raised position;
jaws 22 and 23 of the two gripping members 21 are in the release position; and
locating member 25 is in the raised work position.

Loading device 31 removes the panel 2 in question off stack 32, and releases it onto bars 28, i.e. onto surface P2; and belt conveyors 45 are operated so that push bar 48 pushes panel 2 in direction 12 between jaws 22 and 23 of members 21 and into contact with locating members 24.

At this point, belt conveyors 45 are stopped; panel 2 is pushed by push member 50 in direction 9 and into contact with locating member 25; frame 30 is moved into the lowered position to release panel 2 onto supporting rollers 15; member 25 is moved into the lowered rest position; and jaws 22 and 23 of gripping members 21 are moved into the gripping position.

In connection with the above, it should be pointed out that:
panel 2 is engaged by suction cups 43 of device 31 by one of faces 3, and is released onto bars 28 with the engaged face 3 facing up or down in direction 8; and
to release panel 2 with the face 3 engaged by suction cups 43 facing down in direction 8, arm 40 is rotated about axis 41, and bars 42 moved between bars 28.

Feed devices 44 and 49 are associated with a control device 51 for controlling the dimensions and shape of panels 2, and which, in the example shown, comprises two optical sensors 52 and 53 fitted to bar 48 and member 50 respectively; and two measuring scales 54 and 55 for determining the positions of respective sensors 52 and 53 in respective directions 12 and 9, and so controlling the dimensions of panels 2 in respective directions 12 and 9.

Device 51 also comprises a further two known sensors (not shown) fitted to bar 48 and member 50 respectively, and which, once panels 2 are gripped between bar 48 and locating members 24 and between push member 50 and locating member 25, control the orientation of faces 4 and 5 with respect to direction 12 and direction 9 respectively.

In a variation not shown, conveyors 45 and push member 50 are operated by respective actuating devices commonly referred to as "controlled axes", which supply their positions at each instant in respective directions 12 and 9, and so provide for controlling the dimensions of panels 2 in directions 9 and 12.

## Claims

1. A machine for processing wood panels (2) or similar, comprising first supporting means (13) defining a first supporting surface (P1) for at least one panel (2) for processing; gripping and transportation means (19) for moving the panel (2) in a first and a second direction (12, 9) perpendicular to each other and parallel to said first supporting surface (P1); at least one work head (7a) having at least one tool spindle movable in a third direction (8) perpendicular to the first supporting surface (P1); first locating means (24) carried by said gripping and transportation means (19) and mounted crosswise to the first supporting surface (P1) to position the panel (2) correctly in said first direction (12); and **characterized by** comprising second supporting means (27) defining a second supporting surface (P2) for said panel (2); loading means (31) for loading the panel (2) onto the second supporting surface (P2); and first feed means (44) movable over said second supporting surface (P2) for moving the panel (2) in said first direction (12) onto said gripping and transportation means (19) and into contact with said first locating means (24); said second supporting means (27) comprising a number of supporting bars (28) parallel to one another and to said first direction (12), and spaced apart in said second direction (9) ; and said loading means (31) comprising a number of suction gripping bars (42) movable, in use, between said supporting bars (28).

2. A machine as claimed in Claim 1, and also comprising first control means (52, 54) associated with said first feed means (44) to control a first dimension of the panel (2) in said first direction (12).

3. A machine as claimed in Claim 1 or 2, wherein said first feed means (44) engage, in use, a first face (4) of the panel (2); second control means controlling the orientation of said first face (4) with respect to said first direction (12).

4. A machine as claimed in any one of the foregoing Claims, and also comprising second locating means (25) mounted crosswise to the first supporting surface (P1) to position the panel (2) correctly in said second direction (9); second feed means (49) being provided to move the panel (2) in said second direction (9) and into contact with said second locating means (25).

5. A machine as claimed in Claim 4, and also comprising third control means (53, 55) associated with said second feed means (49) to control a second dimension of the panel (2) in said second direction (9).

6. A machine as claimed in Claim 4 or 5, wherein said second feed means (49) engage, in use, a second face (5) of the panel (2); fourth control means controlling the orientation of said second face (5) with respect to said second direction (9).

## Patentansprüche

1. Maschine zur Verarbeitung von Holzpanelen (2) o. dgl., mit einer ersten Stützeinrichtung (13), welche eine erste Stützfläche (P1) für die Verarbeitung von mindestens einem Panel definiert; mit einer Greif- und Transporteinrichtung (19) zur Bewegung des Panels (2) in einer ersten und einer zweiten Richtung (12, 9) senkrecht zueinander und parallel zur ersten Stützfläche (P1); mit mindestens einem Arbeitskopf (7a) mit mindestens einer Werkzeugspindel, die in einer dritten Richtung (8) senkrecht zur ersten Stützfläche (P1) bewegbar ist; mit einer ersten Richteinrichtung (24), die durch die Greif- und Transporteinrichtung (19) getragen und quer zur ersten Stützfläche (P1) angeordnet ist, um das Panel richtig in die erste Richtung (12) zu positionieren;
**gekennzeichnet durch**
ferner eine zweite Stützeinrichtung (27), welche eine zweite Stützfläche (P2) für das Panel (2) bildet; eine Beladeeinrichtung (31) zum Beladen des Panels (2) auf die zweite Stützfläche (P2); und mit einer ersten Zuführeinrichtung (44), die über die zweite Stützfläche (P2) bewegbar ist, um das Panel in die erste Richtung (12) auf die Greif- und Transporteinrichtung (19) und in Kontakt mit der Richteinrichtung (24) zu bewegen; wobei die zweite Stützeinrichtung (27) mit einer Anzahl von Stützstangen (28) versehen ist, die parallel zueinander und zur ersten Richtung (12) sowie mit Abstand zur zweiten Richtung (9) angeordnet sind, wobei die Beladeeinrichtung (31) eine Anzahl von Saug-Greifstangen (42) aufweist, die bei Gebrauch zwischen den Stützstangen (28) bewegbar ist.

2. Maschine nach Anspruch 1,
**dadurch gekennzeichnet, dass**
diese eine erste Steuereinrichung (52, 54) aufweist, die der ersten Zuführeinrichtung (44) zugeordnet ist, um eine erste Abmessung des Panels (2) in der ersten Richtung (12) zu steuern.

3. Maschine nach Anspruch 1 oder 2,
**dadurch gekennzeichnet, dass**
die erste Zuführeinrichtung (44) in Verwendung mit einer ersten Fläche (4) des Panels (2) zusammenwirkt; und dass eine zweite Steuereinrichtung vorgesehen ist, um die Ausrichtung der ersten Fläche (4) bzgl. der ersten Richtung (12) zu steuern.

4. Maschine nach einem der vorhergehenden Ansprüche,
**dadurch gekennzeichnet, dass**
die zweite Beladeeinrichtung (25) quer zur ersten Stützfläche (P1) angeordnet ist, um das Panel (2) korrekt in der zweiten Richtung (9) zu positionieren; und dass eine zweite Zuführeinrichtung (49) vorgesehen ist, um das Panel (2) in der zweiten Richtung (9) und in Kontakt mit der zweiten Beladeeinrichtung (25) zu bewegen.

5. Maschine nach Anspruch 4,
**dadurch gekennzeichnet, dass**
eine dritte Steuereinrichtung (53, 55) vorgesehen ist, die mit der zweiten Zuführeinrichtung (49) koordiniert ist, um eine zweite Abmessung des Panels (2) in der zweiten Richtung (9) zu steuern.

6. Maschine nach Anspruch 4 oder 5,
**dadurch gekennzeichnet, dass**
die zweite Zuführeinrichtung (49) in Verwendung mit einer zweiten Fläche (5) des Panels (2) zusammenwirkt; und dass eine vierte Steuereinrichtung vorgesehen ist, um die Ausrichtung der zweiten Fläche (5) gegenüber der zweiten Richtung (9) zu kontrollieren.

## Revendications

1. Machine destiné à l'usinage de panneaux de bois (2) ou panneaux similaires, comprenant un premier moyen de support (13) définissant une première surface de support (P1) pour l'usinage d'au moins un panneau (2) ; un moyen de préhension et de transport (19) pour déplacer le panneau (2) dans une première direction et une deuxième direction (12, 9) perpendiculaires l'une à l'autre et parallèlement à ladite première surface de support (P1) ; au moins une tête d'usinage (7a) muni d'au moins une broche porte-outil mobile dans une troisième direction (8) perpendiculaire à la première surface de support (P1) ; un premier moyen de positionnement (24) porté par ledit moyen de préhension et de transport (19) et monté en travers de la première surface de support (P1), pour positionner correctement le panneau (2) dans ladite première direction (12) ; et **caractérisé en ce qu'**elle comprend un deuxième moyen de support (27) définissant une deuxième surface de support (P2) pour ledit panneau (2) ; un moyen de chargement (31) pour charger le panneau (2) sur la deuxième surface de support (P2) ; et un premier moyen d'alimentation (44) mobile sur ladite deuxième surface de support (P2) pour déplacer le panneau (2) dans ladite première direction (12) sur ledit moyen de préhension et de transport (19) et en contact avec ledit premier moyen de positionnement (24) ; ledit deuxième moyen de support (27) comprenant un certain nombre de barres de support (28) parallèles les unes aux autres et à la première direction (12), et espacées les unes des autres dans la deuxième direction (9) ; et ledit moyen de chargement (31) comprenant un certain nombre de barres à ventouses (42) mobiles, en fonctionnement, entre lesdites barres de support (28).

2. Machine selon la revendication 1, et comprenant également un premier moyen de contrôle (52, 54) associé audit premier moyen d'alimentation (44) pour contrôler une première dimension du panneau (2) dans ladite première direction (12).

3. Machine selon la revendication 1 ou 2, dans laquelle ledit premier moyen d'alimentation (44) vient en prise, en fonctionnement, avec une première face (4) du panneau (2) ; un deuxième moyen de contrôle contrôlant l'orientation de ladite première face (4) par rapport à ladite première direction (12).

4. Machine selon l'une quelconque des revendications précédentes, et comprenant également un deuxième moyen de positionnement (25) monté en travers de la première surface de support (P1) pour positionner correctement le panneau (2) dans ladite deuxième direction (9) ; un deuxième moyen d'alimentation (49) étant prévu pour déplacer le panneau (2) dans ladite deuxième direction (9) et en contact avec ledit deuxième moyen de positionnement (25).

5. Machine selon la revendication 4, et comprenant également un troisième moyen de contrôle (53, 55) associé au deuxième moyen d'alimentation (49) pour contrôler une deuxième dimension du panneau (2) dans ladite deuxième direction (9).

6. Machine selon la revendication 4 ou 5, dans laquelle ledit deuxième moyen d'alimentation (49) vient en prise, en fonctionnement, avec une deuxième face (5) du panneau (2) ; un quatrième moyen de contrôle contrôlant l'orientation de ladite deuxième face (5) par rapport à ladite deuxième direction (9).
